# EUROPEAN PATENT APPLICATION

(11) **EP 4 738 677 A1**
(43) Date of publication of application: **06.05.2026**
(21) Application number: 24831677.0
(22) Date of filing: 13.06.2024
(51) Int. Cl.: H02M 3/28, H02J 7/02, H02J 7/10

(54) **POWER SUPPLY SYSTEM AND CONTROL PROGRAM**

(30) Priority: 30.06.2023 JP 2023108738
(71) Applicant: DENSO CORPORATION, Kariya-city, Aichi 448-8661 (JP)
(72) Inventor: ITO, Mitsutaka, Nisshin-city, Aichi 470-0111 (JP); KURACHI, Taisuke, Nisshin-city, Aichi 470-0111 (JP)
(74) Representative: TBK
(86) International application number: PCT/JP2024/021428
(87) International publication number: WO 2025/004812

(57) **Abstract**

In a power supply system (10), a rechargeable battery module (30, 60) including a rechargeable battery (31, 61) and a conversion circuit (40, 70) is connected to a power supply bus (11, 12). A positive electrode and a negative electrode of the rechargeable battery are individually connected to a primary-side terminal pair (41, 42, 71, 72) of the conversion circuit, and the rechargeable battery is serially connected to a secondary-side terminal pair (47, 48, 77, 78) of the conversion circuit. The power supply system includes a bus voltage setting unit (16a) that sets a bus voltage requirement value which is a voltage required for the power supply bus and a control unit (16b) that controls an output voltage of the conversion circuit such that an output voltage of the rechargeable battery module becomes the bus voltage requirement value. The bus voltage setting unit sets the bus voltage requirement value such that an output voltage of the conversion circuit becomes not more than a rated voltage of the conversion circuit.

## Description

### [Cross Reference to Related Application]

This application is based on and claims the benefit of priority from Japanese Patent Application No. 2023-108738 filed June 30, 2023, the contents of each of which are incorporated herein by reference.

### [Technical Field]

The present disclosure relates to a power supply system.

### [Background Art]

For example, there is a rechargeable battery module in which a positive electrode and a negative electrode of a rechargeable battery are individually connected to an input terminal pair of a conversion circuit, and the rechargeable battery is serially connected to an output terminal pair of the conversion circuit (see PTL 1). According to the rechargeable battery module described in PTL 1, a voltage that is a sum of an output voltage Vb of the rechargeable battery and an output voltage Vo of the conversion circuit is an output voltage Vm of the rechargeable battery module. Therefore, it is possible to lower an output voltage Vo required for the conversion circuit when an output voltage Vm is required for the rechargeable battery module, as compared with a rechargeable battery module in which a rechargeable battery is parallelly connected to an output terminal pair of a conversion circuit. Therefore, it is possible to reduce a rated capacity of a conversion circuit.

### [Citation List]

### [Patent Literature]

PTL 1: JP 2022-23722 A

### [Summary of the Invention]

In the rechargeable battery module according to PTL 1, the rated capacity of the conversion circuit can be reduced due to the effect of the circuit configuration itself of the rechargeable battery module. However, there is yet room for improvement in further reducing a rated capacity of a conversion circuit, as a power supply system in which a rechargeable battery module is connected to a power supply bus.

The present disclosure has been made to solve the above-described problem, and has as its main object to further reduce a rated capacity of a conversion circuit in a power supply system in which a rechargeable battery module is connected to a power supply bus.

A first measure for solving the above-described problem is
a power supply system in which a rechargeable battery module including a rechargeable battery and a conversion circuit that converts power input from the rechargeable battery to a primary-side terminal pair and outputs the converted power from a secondary-side terminal pair is connectable to a power supply bus, in which
a positive electrode and a negative electrode of the rechargeable battery are individually connected to the primary-side terminal pair of the conversion circuit, and the rechargeable battery is serially connected to the secondary-side terminal pair of the conversion circuit,
the power supply system includes
a bus voltage setting unit that sets a bus voltage requirement value which is a voltage required for the power supply bus, and
a control unit that controls an output voltage of the conversion circuit such that an output voltage of the rechargeable battery module approaches the bus voltage requirement value, and
the bus voltage setting unit sets the bus voltage requirement value such that an output power of the conversion circuit becomes not more than a rated power of the conversion circuit or such that an output voltage of the conversion circuit becomes not more than a rated voltage of the conversion circuit.

According to the above-described configuration, a power supply system is configured that a rechargeable battery module including a rechargeable battery and a conversion circuit that converts power input from the rechargeable battery to a primary-side terminal pair and outputs the converted power from a secondary-side terminal pair is connected to a power supply bus. Therefore, power can be supplied from a rechargeable battery module to a power supply bus. Note that a power supply bus is a power path (common power path) that is shared for connecting a plurality of circuits, devices, and apparatuses to exchange power in a power supply system.

A positive electrode and a negative electrode of the rechargeable battery are individually connected to the primary-side terminal pair of the conversion circuit, and the rechargeable battery is serially connected to the secondary-side terminal pair of the conversion circuit. According to such a configuration, a voltage that is a sum of an output voltage Vb of a rechargeable battery and an output voltage Vo of a conversion circuit is an output voltage Vm of a rechargeable battery module. Therefore, it is possible to lower an output voltage Vo required for a conversion circuit when an output voltage Vm is required for a rechargeable battery module, as compared with a rechargeable battery module in which a rechargeable battery is parallelly connected to a secondary-side terminal pair of a conversion circuit. Therefore, a rated voltage of a conversion circuit can be lowered, and a rated capacity of a conversion circuit can be accordingly reduced.

Here, a bus voltage setting unit sets a bus voltage requirement value which is a voltage required for the power supply bus. A control unit controls an output voltage Vo of the conversion circuit such that an output voltage Vm of the rechargeable battery module approaches the bus voltage requirement value. Thus, even if an output voltage Vb of a rechargeable battery of a rechargeable battery module is lowered, an output voltage Vm of a rechargeable battery module is allowed to approach a bus voltage requirement value by controlling an output voltage Vo of a conversion circuit.

At this time, an output voltage Vo of a conversion circuit could exceed a rated voltage of a conversion circuit when an output voltage Vo of a conversion circuit increases. In this regards, the bus voltage setting unit sets the bus voltage requirement value such that an output power of the conversion circuit becomes not more than a rated power of the conversion circuit or such that an output voltage Vo of the conversion circuit becomes not more than a rated voltage of the conversion circuit. Therefore, a rated voltage of a conversion circuit can be further lowered, and a rated capacity (rated power capacity, rated power) of a conversion circuit can be accordingly further reduced. As a result, a conversion circuit can be further reduced in size.

In a second measure, the bus voltage setting unit lowers the bus voltage requirement value to lower than the present bus voltage requirement value, in response to an output power of the conversion circuit becoming not less than a prescribed power value which is smaller than the rated power, in response to an output voltage of the conversion circuit becoming not less than the rated voltage, or in response to an output current of the conversion circuit becoming not less than a prescribed current value which is smaller than a rated current of the conversion circuit. According to such a configuration, the bus voltage requirement value can be lowered to lower than the present bus voltage requirement value when an output power of a conversion circuit could exceed a rated capacity. Thus, an output voltage Vo of a conversion circuit can be lowered to lower than a present output voltage Vo, and an output power of a conversion circuit can be inhibited from exceeding a rated capacity. Therefore, a rated capacity of a conversion circuit can be further reduced.

In a third measure, the power supply system includes a current adjustment unit that decreases an output current of the conversion circuit to less than a present output current, in response to an output power of the conversion circuit becoming not less than a prescribed power value which is smaller than the rated power, in response to an output voltage of the conversion circuit becoming not less than the rated voltage, or in response to an output current of the conversion circuit becoming not less than a prescribed current value which is smaller than a rated current of the conversion circuit. According to such a configuration, an output current of the conversion circuit can be decreased to less than a present output current when an output power of a conversion circuit could exceed a rated capacity. Thus, an output power of a conversion circuit can be decreased to less than a present output power, and an output power of a conversion circuit can be inhibited from exceeding a rated capacity. Therefore, a rated capacity of a conversion circuit can be further reduced.

In a fourth measure, the rechargeable battery module is a first rechargeable battery module, a second rechargeable battery module equivalent to the rechargeable battery module is included, and the current adjustment unit decreases an output current of the conversion circuit of the first rechargeable battery module to less than a present output current and increases an output current of the conversion circuit of the second rechargeable battery module to more than a present output current, in response to an output power of the conversion circuit of the first rechargeable battery module becoming not less than the prescribed power value, in response to an output voltage of the conversion circuit of the first rechargeable battery module becoming not less than the rated voltage, or in response to an output current of the conversion circuit of the first rechargeable battery module becoming not less than the prescribed current value.

According to the above-described configuration, the rechargeable battery module is a first rechargeable battery module, and a power supply system includes a second rechargeable battery module equivalent to the rechargeable battery module. Thus, power can be supplied from a first rechargeable battery module and a second rechargeable battery module to a power supply bus. Then, an output current of the conversion circuit of a first rechargeable battery module can be decreased to less than a present output current when an output power of a conversion circuit of a first rechargeable battery module could exceed a rated capacity. Thus, an output power of a conversion circuit of a first rechargeable battery module can be decreased to less than a present output power, and an output power of a conversion circuit of a first rechargeable battery module can be inhibited from exceeding a rated capacity. Therefore, a rated capacity of a conversion circuit of a first rechargeable battery module can be further reduced.

Furthermore, an output current of the conversion circuit of a second rechargeable battery module is increased to more than a present output current when decreasing an output current of the conversion circuit of a first rechargeable battery module to less than a present output current. Thus, even if an output current of the conversion circuit of a first rechargeable battery module is decreased, a total of currents supplied from a first rechargeable battery module and a second rechargeable battery module to a power supply bus can be inhibited from decreasing.

In a fifth measure, the rechargeable battery module is a first rechargeable battery module, a second rechargeable battery module equivalent to the rechargeable battery module is included, and the control unit charges the rechargeable battery of the first rechargeable battery module from the rechargeable battery of the second rechargeable battery module, in response to an output power of the conversion circuit of the first rechargeable battery module becoming not less than a prescribed power value which is smaller than the rated power, in response to an output voltage of the conversion circuit of the first rechargeable battery module becoming not less than the rated voltage, or in response to an output current of the conversion circuit of the first rechargeable battery module becoming not less than a prescribed current value which is smaller than a rated current of the conversion circuit.

According to the above-described configuration, the rechargeable battery of the first rechargeable battery module can be charged from the rechargeable battery of the second rechargeable battery module when an output power of a conversion circuit of a first rechargeable battery module could exceed a rated capacity. Thus, a charged amount of a rechargeable battery of a first rechargeable battery module can be increased, and an output voltage Vb of a rechargeable battery of a first rechargeable battery module can be raised. Therefore, when an output voltage Vm is required for a first rechargeable battery module, an output voltage Vo required for a conversion circuit of a first rechargeable battery module can be lowered. As a result, a rated voltage of a conversion circuit of a first rechargeable battery module can be further lowered, and a rated capacity of a conversion circuit of a first rechargeable battery module can be accordingly further reduced.

In a sixth measure, the power supply system includes a resistance adjustment unit that lowers an internal resistance of the rechargeable battery of the rechargeable battery module including the conversion circuit to lower than a present internal resistance, in response to an output power of the conversion circuit becoming not less than a prescribed power value which is smaller than the rated power, in response to an output voltage of the conversion circuit becoming not less than the rated voltage, or in response to an output current of the conversion circuit becoming not less than a prescribed current value which is smaller than a rated current of the conversion circuit. According to such a configuration, an internal resistance of the rechargeable battery of the rechargeable battery module including the conversion circuit can be lowered to lower than a present internal resistance when an output power of a conversion circuit could exceed a rated capacity. Thus, a voltage drop caused by the internal resistance of a rechargeable battery can be decreased, and an output voltage Vb of a rechargeable battery can be raised. Therefore, when an output voltage Vm is required for a rechargeable battery module, an output voltage Vo required for a conversion circuit can be lowered. As a result, a rated voltage of a conversion circuit can be further lowered, and a rated capacity of a conversion circuit can be accordingly further reduced.

In general, an internal resistance of a rechargeable battery correlates with a temperature of a rechargeable battery. Therefore, in a seventh measure, the resistance adjustment unit lowers an internal resistance of the rechargeable battery to lower than a present internal resistance by changing a temperature of the rechargeable battery from a present temperature. According to such a configuration, an internal resistance of a rechargeable battery can be lowered to lower than a present internal resistance, taking advantage of the fact that an internal resistance of a rechargeable battery correlates with a temperature of a rechargeable battery. For example, when an internal resistance is lowered as a temperature of a rechargeable battery rises, an internal resistance of a rechargeable battery can be lowered by increasing a current flowing to a rechargeable battery or by heating a rechargeable battery with a heater.

In an eighth measure, a prescribed rechargeable battery module that includes a rechargeable battery and does not include the conversion circuit is connected to the power supply bus. According to such a configuration, power can be supplied from a prescribed rechargeable battery module to a power supply bus. Further, a rechargeable battery module including a conversion circuit can adjust an output voltage Vm of a rechargeable battery module to an output voltage Vmb of a prescribed rechargeable battery module by controlling an output voltage Vo of a conversion circuit added to an output voltage Vb of a rechargeable battery. Therefore, a rush current and a circulating current can be inhibited from flowing through a rechargeable battery module and a prescribed rechargeable battery module while reducing the number of conversion circuits in the entirety of a power supply system.

In a ninth measure, a load is connected to the rechargeable battery module, and an interruption-connection circuit that interrupts and connects the rechargeable battery module and the load to the power supply bus is included.

According to the above-described configuration, a charged amount of a rechargeable battery of a rechargeable battery module can be decreased by supplying power from a rechargeable battery module to a load in a state in which the rechargeable battery module and the load are interrupted to the power supply bus by an interruption-connection circuit. Then, an output voltage Vb of a rechargeable battery can be lowered by decreasing a charged amount of a rechargeable battery. Thus, an output voltage Vb of a rechargeable battery of a rechargeable battery module is easily lowered to lower than an output voltage Vb of a rechargeable battery of a prescribed rechargeable battery module. Therefore, control of adding an output voltage Vo of a conversion circuit to an output voltage Vb of a rechargeable battery of a rechargeable battery module is facilitated, and an output voltage Vm of a rechargeable battery module is easily adjusted to an output voltage Vmb of a prescribed rechargeable battery module.

In a tenth measure, a load is connected to the power supply bus and the prescribed rechargeable battery module, and an interruption-connection circuit that interrupts and connects the prescribed rechargeable battery module to the power supply bus and the load is included.

According to the above-described configuration, power can be supplied from a prescribed rechargeable battery module to a load. Further, when a prescribed rechargeable battery module fails, the prescribed rechargeable battery module can be interrupted to the power supply bus and the load by an interruption-connection circuit. Even in this case, power can be supplied from a power supply bus to a load by supplying power from a rechargeable battery module to a power supply bus.

In an eleventh measure, the power supply system includes switching circuits that switch the rechargeable battery module and the prescribed rechargeable battery module between parallel connection and serial connection. According to such a configuration, power can be supplied from the rechargeable battery module and the prescribed rechargeable battery module to a power supply bus when the rechargeable battery module and the prescribed rechargeable battery module are switched to parallel connection by a switching circuit. Thus, the rechargeable battery module and the prescribed rechargeable battery module can be used as a redundant power source. Further, when the rechargeable battery module and the prescribed rechargeable battery module are switched to serial connection by a switching circuit, a voltage that is a sum of an output voltage Vm of the rechargeable battery module and an output voltage Vmb of the prescribed rechargeable battery module can be supplied to a power supply bus. Thus, the rechargeable battery module and the prescribed rechargeable battery module can be used as a higher voltage power source.

In a twelfth measure, the power supply system includes a plurality of the rechargeable battery modules and switching circuits that switch the plurality of the rechargeable battery modules between parallel connection and serial connection. According to such a configuration, power can be supplied from the plurality of the rechargeable battery modules to a power supply bus when the plurality of the rechargeable battery modules is switched to parallel connection by a switching circuit. Thus, a plurality of rechargeable battery modules can be used as a redundant power source. Further, when the plurality of the rechargeable battery modules is switched to serial connection by a switching circuit, a voltage that is a sum of output voltages Vm's of a plurality of rechargeable battery modules can be supplied to a power supply bus. Thus, a plurality of rechargeable battery modules can be used as a higher voltage power source.

A thirteenth measure is
a control program applied to a power supply system in which a rechargeable battery module including a rechargeable battery and a conversion circuit that converts power input from the rechargeable battery to a primary-side terminal pair and outputs the converted power from a secondary-side terminal pair is connectable to a power supply bus, a positive electrode and a negative electrode of the rechargeable battery are individually connected to the primary-side terminal pair of the conversion circuit, and the rechargeable battery is serially connected to the secondary-side terminal pair of the conversion circuit,
the control program causes a computer to execute:
   processing of setting a bus voltage requirement value that is a voltage required for the power supply bus;
   processing of controlling an output voltage of the conversion circuit such that an output voltage of the rechargeable battery module approaches the bus voltage requirement value; and
   processing of setting the bus voltage requirement value such that an output power of the conversion circuit becomes not more than a rated power of the conversion circuit or such that an output voltage of the conversion circuit becomes not more than a rated voltage of the conversion circuit.

According to the above-described configuration, the same working effect as in the first measure can be exerted by causing a computer to execute a control program applied to a power supply system.

### [Brief Description of the Drawings]

The above-described and other objects, features, and advantages of the present disclosure will become clearer from the following detailed description with reference to the accompanying drawings. The drawings are as follows:
Fig. 1 is a circuit diagram of a power supply system;
Fig. 2 is a circuit diagram showing an example of a conversion circuit;
Fig. 3 is a flowchart showing a control procedure of a bus voltage requirement value and an output current requirement value of a conversion circuit;
Fig. 4 is a circuit diagram showing a state in which a first output power of a first conversion circuit is large;
Fig. 5 is a circuit diagram showing a state in which a bus voltage requirement value is lowered;
Fig. 6 is a circuit diagram showing a state in which a first output current requirement value of a first conversion circuit is decreased;
Fig. 7 is a circuit diagram showing a state in which a first output current requirement value of a first conversion circuit is decreased while a second output current requirement value of a second conversion circuit is increased;
Fig. 8 is a circuit diagram showing a state in which a first rechargeable battery is charged from a second rechargeable battery;
Fig. 9 is a circuit diagram showing a state in which a first rechargeable battery is charged from a second rechargeable battery while an output current requirement value of a first conversion circuit is decreased;
Fig. 10 is a circuit diagram of a modification example of a power supply system;
Fig. 11 is a circuit diagram of another modification example of a power supply system;
Fig. 12 is a circuit diagram of another modification example of a power supply system;
Fig. 13 is a circuit diagram of another modification example of a power supply system;
Fig. 14 is a circuit diagram of another modification example of a power supply system;
Fig. 15 is a circuit diagram of another modification example of a power supply system;
Fig. 16 is a circuit diagram of a modification example of a conversion circuit;
Fig. 17 is a circuit diagram of another modification example of a conversion circuit; and
Fig. 18 is a circuit diagram of a modification example of a rechargeable battery module.

### [Description of the Embodiment]

Hereinafter, an embodiment embodied in a power supply system that supplies power to a load will be described with reference to the drawings.

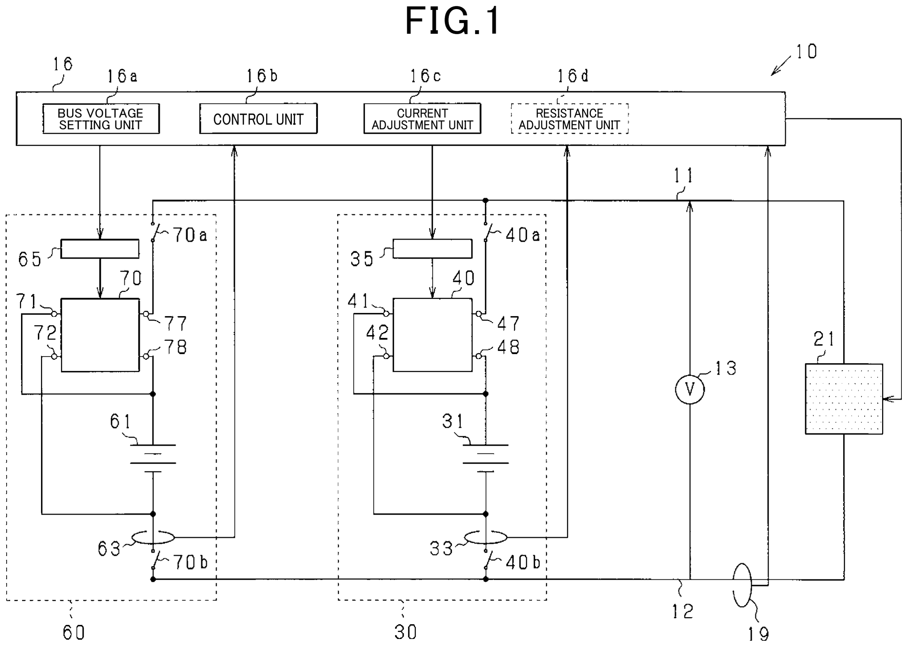

As shown in Fig. 1, a power supply system 10 includes buses 11 and 12 (power supply buses), a first rechargeable battery module 30, a second rechargeable battery module 60, a voltage sensor 13, a current sensor 19, an electronic control unit (ECU) 16, and the like. Note that the positive electrode side (positive side) of the bus is referred to as a bus 11, and the negative electrode side (negative side) of the bus is referred to as a bus 12. The bus 12 is earthed.

The first rechargeable battery module 30 (rechargeable battery module), the second rechargeable battery module 60 (rechargeable battery module), a load 21, and the voltage sensor 13 are parallelly connected to the buses 11 and 12. The rechargeable battery modules 30 and 60 input and output power to the buses 11 and 12. The load 21 inputs power from the buses 11 and 12 or inputs and outputs power to the buses 11 and 12. The voltage sensor 13 detects a bus voltage Vbus that is a voltage between the bus 12 and the bus 11. The current sensor 19 detects a current flowing to the bus 12 (the load 21).

Examples of the load 21 include a combination of an inverter and a motor generator (MG) (a motor unit with an inverter), an electric heater, and a DCDC converter. A motor generator (MG), for example, drives an electric vehicle by power supplied from an inverter or regenerates power by torque provided from an electric vehicle. An inverter converts power between the buses 11 and 12 and the MG. An electric heater, for example, generates heat by high voltage supplied from the buses 11 and 12 to warm a vehicle interior and a battery. A DCDC converter, for example, converts DC power supplied from the buses 11 and 12 to supply DC power or converts DC power supplied from a solar panel or the like to supply DC power to the buses 11 and 12. The number of loads 21 may be one or more.

The first rechargeable battery module 30 includes a first rechargeable battery 31, a first current sensor 33, a first drive circuit 35, a first conversion circuit 40, relays 40a and 40b, and the like. An example of the first rechargeable battery 31 (rechargeable battery) is a high-voltage secondary battery using a lithium-ion battery, a nickel-metal hydride battery, or the like, and the type thereof is optional. The first current sensor 33 (current sensor) detects a current flowing to the first rechargeable battery 31. The detected value by the first current sensor 33 is input to the ECU 16 and used for, for example, calculation of the charged amount (state of charge (SOC)) of the first rechargeable battery 31. The first drive circuit 35 (drive circuit) drives on/off a switching element (described later) included in the first conversion circuit 40. The first drive circuit 35 is controlled by the ECU 16. The relays 40a and 40b disconnect and connect the rechargeable battery module 30 to the buses 11 and 12, respectively. Note that the first rechargeable battery 31 (rechargeable battery) may be a secondary battery which voltage is not high.

The first conversion circuit 40 (conversion circuit) includes a primary-side positive electrode terminal 41 and a primary-side negative electrode terminal 42 which are a primary-side terminal pair as well as a secondary-side positive electrode terminal 47 and a secondary-side negative electrode terminal 48 which are a secondary-side terminal pair. The negative electrode of the first rechargeable battery 31 is connected to the bus 12. The primary-side positive electrode terminal 41 is connected to the positive electrode of the first rechargeable battery 31, and the primary-side negative electrode terminal 42 is connected to the negative electrode of the first rechargeable battery 31. Further, the secondary-side negative electrode terminal 48 is connected to the positive electrode of the first rechargeable battery 31. The secondary-side positive electrode terminal 47 is connected to the bus 11. That is, the positive electrode and the negative electrode of the first rechargeable battery 31 are respectively connected to the primary-side terminal pair 41 and 42 of the first conversion circuit 40, and the first rechargeable battery 31 is serially connected to the secondary-side terminal pair 47 and 48 of the first conversion circuit 40. The first conversion circuit 40 converts power input from the first rechargeable battery 31 to the primary-side terminal pair 41 and 42 and outputs the converted power from the secondary-side terminal pair 47 and 48. Note that the first conversion circuit 40 is a two-way conversion circuit that can also convert power input to the secondary-side terminal pair 47 and 48 and outputs the converted power from the primary-side terminal pair 41 and 42.

The second rechargeable battery module 60 has the same configuration as that of the first rechargeable battery module 30 and includes a second rechargeable battery 61 (rechargeable battery), a second current sensor 63 (current sensor), a second drive circuit 65 (drive circuit), a second conversion circuit 70, relays 70a and 70b, and the like. The second conversion circuit 70 (conversion circuit) has the same configuration as that of the first conversion circuit 40 and includes a primary-side positive electrode terminal 71 and a primary-side negative electrode terminal 72 which are a primary-side terminal pair as well as a secondary-side positive electrode terminal 77 and a secondary-side negative electrode terminal 78 which are a secondary-side terminal pair. Since the connection aspect of these constituents is also the same as in the first rechargeable battery module 30, the above-described description regarding the first rechargeable battery module 30 is incorporated herein by reference. Note that the configuration of the first rechargeable battery module 30 has the same function as the configuration of the second rechargeable battery module 60, but the rating and withstand voltage may differ between the configurations.

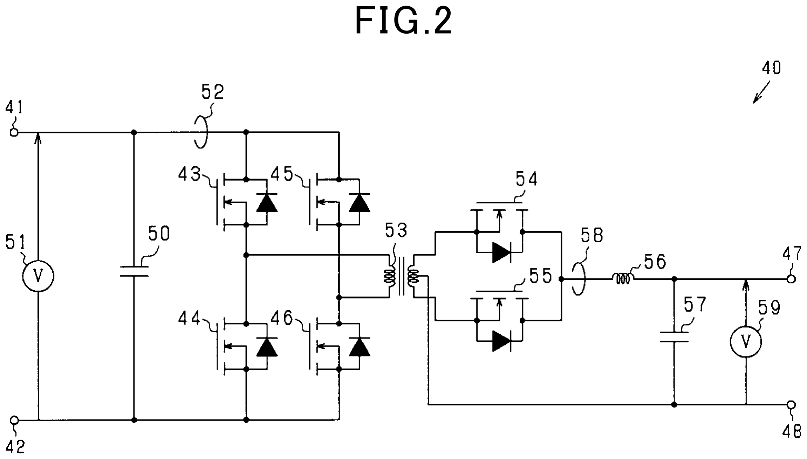

Fig. 2 is a diagram showing an example of the first conversion circuit 40. The first conversion circuit 40 is a known center tap type insulated DCDC converter. The first conversion circuit 40 includes switching elements 43 to 46, 54, and 55, smoothing capacitors 50 and 57, a transformer 53, a reactor 56, voltage sensors 51 and 59, current sensors 52 and 58, and the like. The switching elements 43 to 46, 54, and 55 are each, for example, a FET or an insulated gate bipolar transistor (IGBT). The switching elements 43 to 46 constitute a full bridge circuit. The connection point between the switching element 43 and the switching element 44 and the connection point between the switching element 45 and the switching element 46 are individually connected to both ends of the primary-side coil of the transformer 53. The switching elements 54 and 55 are individually connected between both ends of the secondary-side coil of the transformer 53 and the reactor 56. The voltage sensor 51 detects a voltage between the primary-side terminal pair 42 and the primary-side positive electrode terminal 41, i.e., an output voltage Vb of the first rechargeable battery 31. The current sensor 52 detects an input current Ii which is a current input to the primary-side circuit. The voltage sensor 59 detects a voltage between the secondary-side negative electrode terminal 48 and the secondary-side positive electrode terminal 47, i.e., an output voltage Vo of the first conversion circuit 40. The current sensor 58 detects a current flowing through the reactor 56, i.e., an output current Io of the first conversion circuit 40. The detected values by the voltage sensors 51 and 59 and the current sensors 52 and 58 are input to the ECU 16.

The ECU 16 (control device) is configured as, for example, a microcomputer (computer) including a CPU, a ROM, a RAM, an input-output interface, and the like. The ECU 16 controls the state of relays 15 and 17 and the state of the load 21. The ECU 16 executes a control program applied to the power supply system 10 to achieve functions of a bus voltage setting unit 16a, a control unit 16b, a current adjustment unit 16c, a resistance adjustment unit 16d, and the like.

The bus voltage setting unit 16a sets a bus voltage requirement value Vbus* that is a voltage required to be supplied from the buses 11 and 12 to the load 21. The bus voltage setting unit 16a sets the bus voltage requirement value Vbus* based on the state of the load 21.

The control unit 16b controls output voltages Vo1 and Vo2 of the conversion circuits 40 and 70, respectively, such that output voltages Vm1 and Vm2 of the rechargeable battery modules 30 and 60 each become the bus voltage requirement value Vbus* (each approach the bus voltage requirement value Vbus*). For example, the control unit 16b controls the switching elements 43 to 46, 54, and 55 based on the detected values by the voltage sensors 51 and 59 and the current sensors 52 and 58 thereby to control such that the first output voltage Vo1 of the first conversion circuit 40 becomes (approaches) a first output voltage requirement value Vo1*. Specifically, the first output voltage requirement value Vo1* is set to a voltage (Vo1* = Vbus* - Vb1) obtained by subtracting a first output voltage Vb1 of the first rechargeable battery 31 from the bus voltage requirement value Vbus*. Similarly, the control unit 16b controls such that the second output voltage Vo2 of the second conversion circuit 70 becomes (approaches) a second output voltage requirement value Vo2*. Specifically, the second output voltage requirement value Vo2* is set to a voltage (Vo2* = Vbus* - Vb2) obtained by subtracting a second output voltage Vb2 of the second rechargeable battery 61 from the bus voltage requirement value Vbus*.

Here, the output voltages Vo1 and Vo2 of the conversion circuits 40 and 70 could exceed the rated voltages of the conversion circuits 40 and 70 when the output voltages Vo1 and Vo2 of the conversion circuits 40 and 70 become high. On the other hand, when the withstand voltages of the components of the conversion circuits 40 and 70 are raised to raise the rated voltages of the conversion circuits 40 and 70, the conversion circuits 40 and 70 are increased in size. Therefore, the bus voltage setting unit 16a sets the bus voltage requirement value Vbus* such that output powers Po1 and Po2 of the conversion circuits 40 and 70 become not more than the rated powers (rated capacities) of the conversion circuits 40 and 70 or such that the output voltages Vo1 and Vo2 of the conversion circuits 40 and 70 become not more than the rated voltages of the conversion circuits 40 and 70. Specifically, the ECU 16 executes the following control.

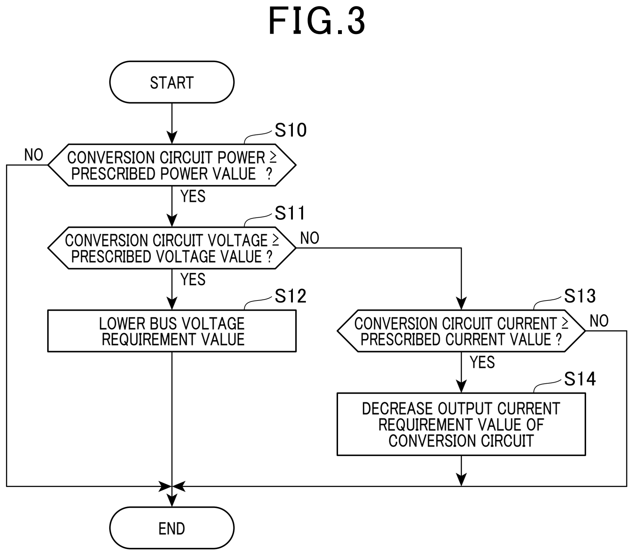

Fig. 3 is a flowchart showing a control procedure of the bus voltage requirement value Vbus* and output current requirement values Io1* and Io2* of the conversion circuits 40 and 70. This series of processes is repeatedly executed by the ECU 16 to the rechargeable battery modules 30 and 60 at prescribed periods. Here, the processes to the first rechargeable battery module 30 will be described as an example.

First, it is determined whether the first output power Po1 of the first conversion circuit 40 is a prescribed power value Pr or more (S10). The first output power Po1 is calculated by multiplying a first output current Io1 detected by the current sensor 58 of the first conversion circuit 40 by the first output voltage Vo1 detected by the voltage sensors 59 (Po1 = Io1 × Vo1). The prescribed power value Pr is set to, for example, a power value (a power value smaller by a difference value) which is somewhat smaller than a rated capacity Pc (rated power capacity, rated power) of the first conversion circuit 40. Note that the prescribed power value Pr can also be set to be the same as the rated capacity Pc. When it was determined in this determination that the first output power Po1 of the first conversion circuit 40 is not the prescribed power value Pr or more (S10: NO), this series of processes is temporarily terminated (END).

On the other hand, when it was determined in the determination of S10 that the first output power Po1 of the first conversion circuit 40 is the prescribed power value Pr or more (S10: YES), it is determined whether the first output voltage Vo1 of the first conversion circuit 40 is a prescribed voltage value Vr or more (S11). The prescribed voltage value Vr is set to, for example, the same as a rated voltage Vc of the first conversion circuit 40 (Vr = Vc). The prescribed voltage value Vr is a voltage that is lower than a withstand voltage of the first conversion circuit 40. When it was determined in this determination that the first output voltage Vo1 of the first conversion circuit 40 is the prescribed voltage value Vr or more (S11: YES), the bus voltage requirement value Vbus* is lowered to lower than the present bus voltage requirement value Vbus* (S12). For example, the bus voltage requirement value Vbus* is set to a voltage obtained by adding the first output voltage Vb1 of the first rechargeable battery 31 to the rated voltage Vc of the first conversion circuit 40 (Vbus* = Vc + Vb1). At this time, it is determined that the second output voltage Vo2 of the second conversion circuit 70 is the prescribed voltage value Vr or more, and the bus voltage requirement value Vbus* is set to Vbus* = Vc + Vb2 in some cases. In this case, the lower Vbus* of Vbus* = Vc + Vb1 and Vbus* = Vc + Vb2 is adopted. Note that in the process of S12, the bus voltage requirement value Vbus* can also be set to a voltage that is lower by a prescribed value than the present bus voltage requirement value Vbus*. Thereafter, this series of processes is temporarily terminated (END).

Further, when it was determined in the determination of S11 that the first output voltage Vo1 of the first conversion circuit 40 is not the prescribed voltage value Vr or more (S11: NO), it is determined whether the first output current Io1 of the first conversion circuit 40 is a prescribed current value Ir or more (S13). The prescribed current value Ir is set to, for example, a current (a current smaller by a difference value) that is somewhat smaller than a rated current Ic of the first conversion circuit 40. Note that the prescribed current value Ir can also be set to the same as the rated current Ic. When it was determined in this determination that the first output current Io1 of the first conversion circuit 40 is the prescribed current value Ir or more (S13: YES), the first output current requirement value Io1* of the first conversion circuit 40 is decreased to less than the present first output current requirement value Io1* (S14). For example, the first output current requirement value Io1* is set to a current that is decreased by a prescribed value from the present first output current requirement value Io1*. Thereafter, this series of processes is temporarily terminated (END).

On the other hand, when it was determined in the determination of S13 that the first output current Io1 of the first conversion circuit 40 is not the prescribed current value Ir or more (S13: NO), this series of processes is temporarily terminated (END). Further, this series of processes is repeatedly executed at prescribed periods by the ECU 16 to the second rechargeable battery module 60 in the same manner. Note that the processes of S10 to S12 correspond to processing as the bus voltage setting unit 16a, and the processes of S13 and S14 correspond to processing as a current adjustment unit.

Next, an aspect of controlling the bus voltage requirement value Vbus* and the output current requirement values Io1* and Io2* of the conversion circuits 40 and 70 by the series of processes of Fig. 3 will be described.

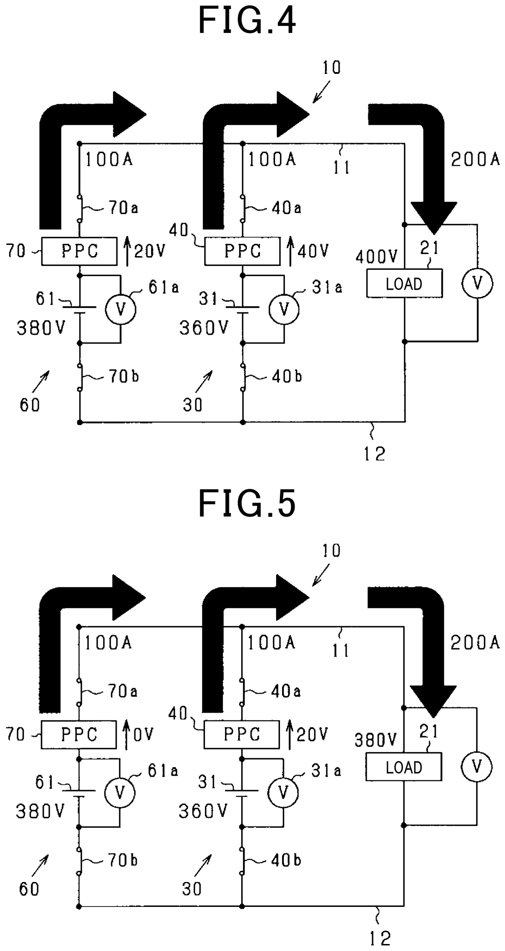

Fig. 4 is a circuit diagram showing a state in which the first output power Po1 of the conversion circuit 40 is large. Note that in Fig. 4, the connection aspect of the conversion circuits 40 and 70 (partial boost converters (PPCs)) is simplified. Rechargeable battery modules 30 and 60 include voltage sensors 31a and 61a that respectively detect voltages of rechargeable batteries 31 and 61 and relays 40a, 40b, 70a, and 70b (switches) that individually disconnect and connect the rechargeable battery modules 30 and 60 to buses 11 and 12. In this example, the output voltages Vb1 and Vb2 of the rechargeable batteries 31 and 61 are respectively 360 [V] and 380 [v]. The output currents Io1 and Io2 of the conversion circuits 40 and 70 are respectively 100 [A] and 100 [A]. The bus voltage requirement value is Vbus* = 400 [V], and the output voltages Vo1 and Vo2 of the conversion circuits 40 and 70 are respectively 40 [V] and 20 [V]. Accordingly, a voltage of 400 [V] is applied to the load 21, and a current of 200 [A] flows through the load 21. Then, the first output power Po1 of the first conversion circuit 40 is 100 [A] × 40 [V] = 4000 [W].

Here, it is assumed that the first output power Po1 = 4000 [W] is the prescribed power value Pr or more while the first output voltage Vo1 = 40 [V] is the prescribed voltage value Vr or more. In this case, for example, the bus voltage requirement value Vbus* is lowered to 380 [V], as shown in Fig. 5. Accordingly,the output voltage requirement value Vo1* and Vo2* of the conversion circuits 40 and 70 are respectively lowered to 20 [V] and 0 [V], and the output voltages Vo1 and Vo2 of the conversion circuits 40 and 70 are respectively lowered to 20 [V] and 0 [V].

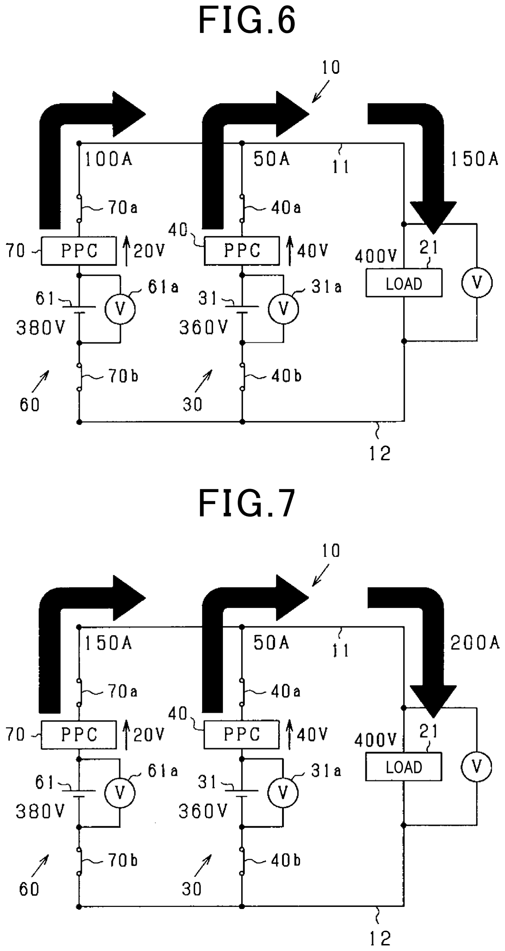

Alternatively, it is assumed that the first output power Po1 = 4000 [W] is the prescribed power value Pr or more while the first output current Io1 = 100 [A] is the prescribed current value Ir or more. In this case, for example, the first output current requirement value Io1* is decreased to 50 [A], as shown in Fig. 6. Accordingly, the first output current Io1 of the first conversion circuit 40 is decreased to 50 [A].

The present embodiment described in detail above has the following advantages.
· The positive electrodes and negative electrodes of the rechargeable batteries 31 and 61 are connected to the primary-side terminal pairs 41, 42, 71, and 72 of the conversion circuits 40 and 70, respectively, and the rechargeable batteries 31 and 61 are serially connected to the secondary-side terminal pairs 47, 48, 77, and 78 of the conversion circuits 40 and 70, respectively. According to such a configuration, voltages obtained by adding the output voltages Vb1 and Vb2 of the rechargeable batteries 31 and 61 to the output voltages Vo1 and Vo2 of the conversion circuits 40 and 70 are the output voltages Vm1 and Vm2 of the rechargeable battery modules 30 and 60, respectively. Therefore, as compared to a rechargeable battery module in which the rechargeable batteries 31 and 61 are parallelly connected to the secondary-side terminal pairs 47, 48, 77, and 78 of the conversion circuits 40 and 70, respectively, it is possible to respectively lower the output voltages Vo1 and Vo2 required for the conversion circuits 40 and 70 when the output voltages Vm1 and Vm2 are respectively required for the rechargeable battery modules 30 and 60. Therefore, the rated voltages Vc's of the conversion circuits 40 and 70 can be lowered, and the rated capacities Pc's of the conversion circuits 40 and 70 can be accordingly reduced.
· The bus voltage setting unit 16a sets the bus voltage requirement value Vbus* that is a voltage required for the buses 11 and 12. The control unit 16b controls the output voltages Vo1 and Vo2 of the conversion circuits 40 and 70, respectively, such that the output voltages Vm1 and Vm2 of the rechargeable battery modules 30 and 60 each become the bus voltage requirement value Vbus*. Thus, even if the output voltages Vb1 and Vb2 of the rechargeable batteries 31 and 61 of the rechargeable battery modules 30 and 60 are lowered, the output voltages Vm1 and Vm2 of the rechargeable battery modules 30 and 60 can be adjusted to the bus voltage requirement value Vbus* by controlling the output voltages Vo1 and Vo2 of the conversion circuits 40 and 70.
· When the output voltages Vo1 and Vo2 of the conversion circuits 40 and 70 become high, the output voltages Vo1 and Vo2 of the conversion circuits 40 and 70 could exceed the rated voltages Vc's of the conversion circuits 40 and 70. In this regards, the bus voltage setting unit 16a sets the bus voltage requirement value Vbus* such that the output powers Po1 and Po2 of the conversion circuits 40 and 70 become not more than the rated capacities Pc's of the conversion circuits 40 and 70 or such that the output voltages Vo1 and Vo2 of the conversion circuits 40 and 70 become not more than the rated voltages Vc's of the conversion circuits 40 and 70. Therefore, the rated voltages Vc's of the conversion circuits 40 and 70 can be further lowered, and the rated capacities Pc's of the conversion circuits 40 and 70 can be accordingly further reduced. As a result, the conversion circuits 40 and 70 can be further reduced in size.
· When the output powers Po1 and Po2 of the conversion circuits 40 and 70 each become the prescribed power value Pr or more while the output voltages Vo1 and Vo2 of the conversion circuits 40 and 70 each become the prescribed voltage value Vr or more, the bus voltage setting unit 16a lowers the bus voltage requirement value Vbus* to lower than the present bus voltage requirement value Vbus*. According to such a configuration, when the output powers Po1 and Po2 of the conversion circuits 40 and 70 could exceed the rated capacity Pc, the bus voltage requirement value Vbus* can be lowered to lower than the present bus voltage requirement value Vbus*. Thus, the output voltages Vo1 and Vo2 of the conversion circuits 40 and 70 can be respectively lowered to lower than the present output voltages Vo1 and Vo2, and the output powers Po1 and Po2 of the conversion circuits 40 and 70 can be inhibited from exceeding the rated capacities Pc's. Therefore, the rated capacities Pc's of the conversion circuits 40 and 70 can be further reduced.
· When the output powers Po1 and Po2 of the conversion circuits 40 and 70 each become the prescribed power value Pr or more while the output currents Io1 and Io2 of the conversion circuits 40 and 70 each become the prescribed current value Ir or more, the current adjustment unit 16c decreases the output currents Io1 and Io2 of the conversion circuits 40 and 70 to lower than the present output currents Io1 and Io2. According to such a configuration, the output currents Io1 and Io2 of the conversion circuits 40 and 70 can be decreased to less than the present output currents Io1 and Io2, respectively, when the output powers Po1 and Po2 of the conversion circuits 40 and 70 could exceed the rated capacities Pc's. Thus, the output powers Po1 and Po2 of the conversion circuits 40 and 70 can be decreased to less than the present output powers Po1 and Po2, respectively, and the output powers Po1 and Po2 of the conversion circuits 40 and 70 can be inhibited from exceeding the rated capacities Pc's. Therefore, the rated capacities Pc's of the conversion circuits 40 and 70 can be further reduced.
· The above-described working effect can be exerted by causing the ECU 16 (computer) to execute the control program applied to the power supply system 10.

Note that the above-described embodiment can also be implemented with the following modifications. The same portion as in the above-described embodiment is assigned with the same reference sign thereby to omit the description thereof.
· In Fig. 4, it is assumed that the first output power Po1 = 4000 [W] is the prescribed power value Pr or more while the first output current Io1 = 100 [A] is the prescribed current value Ir or more. In this case, for example, the current adjustment unit 16c may decrease the first output current requirement value Io1* to 50 [A] while increasing the second output current requirement value Io2* to 150 [A], as shown in Fig. 7. Note that the second output power Po2 = 150 [A] × 20 [V] = 3000 [W] of the second conversion circuit 70 is smaller than the prescribed power value Pr. Accordingly, the first output current Io1 of the first conversion circuit 40 is decreased to 50 [A], and the second output current Io2 of the second conversion circuit 70 is increased to 150 [A]. As a result, a current of 200 [A] can be supplied to the load 21, similarly to in Fig. 4. According to such a configuration, even if the first output current Io1 of the first conversion circuit 40 of the first rechargeable battery module 30 is decreased, a total of currents supplied from the first rechargeable battery module 30 and the second rechargeable battery module 60 to the buses 11 and 12 can be inhibited from decreasing.

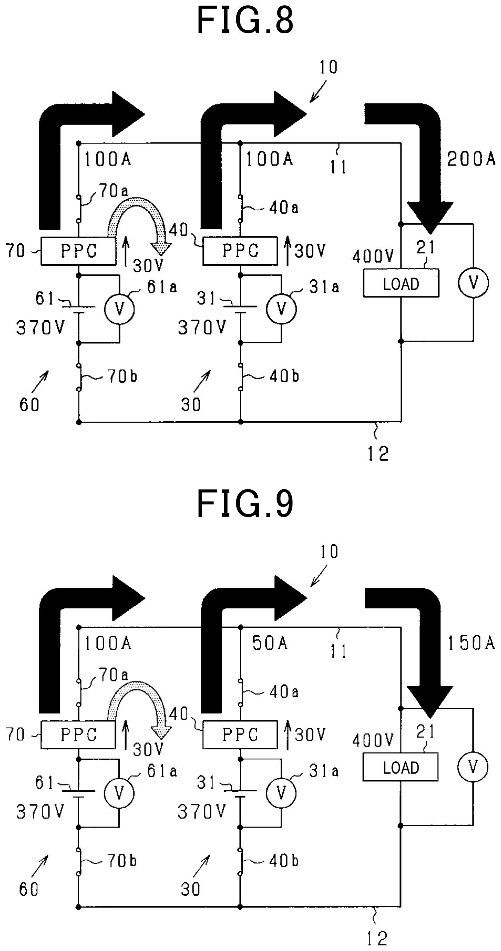

· In Fig. 4, it is assumed that the first output power Po1 = 4000 [W] is the prescribed power value Pr or more while the first output voltage Vo1 = 40 [V] is the prescribed voltage value Vr or more. In this case, for example, the control unit 16b may charge the first rechargeable battery 31 of the first rechargeable battery module 30 from the second rechargeable battery 61 of the second rechargeable battery module 60, as shown in Fig. 8. Accordingly, the charged amount of the first rechargeable battery 31 of the first rechargeable battery module 30 can be increased, and the first output voltage Vb1 of the first rechargeable battery 31 of the first rechargeable battery module 30 can be raised, for example, from 360 [V] (see Fig. 4) to 370 [V]. Note that the second output voltage Vb2 of the second rechargeable battery 61 of the second rechargeable battery module 60 is lowered, for example, from 380 [V] (see Fig. 4) to 370 [V]. Therefore, when the first output voltage Vm1 = 400 [V] is required for the first rechargeable battery module 30, the first output voltage Vo1 required for the first conversion circuit 40 of the first rechargeable battery module 30 can be lowered. As a result, the rated voltage Vc of the first conversion circuit 40 of the first rechargeable battery module 30 can be further lowered, and the rated capacity Pc of the first conversion circuit 40 of the first rechargeable battery module 30 can be accordingly further reduced.

Furthermore, for example, the current adjustment unit 16c may decrease a load current requirement value It* that is a current required for the load 21 to 150 [A] and decrease the first output current requirement value Io1* to 50 [A], as shown in Fig. 9. Accordingly, the first output current Io1 of the first conversion circuit 40 is decreased to 50 [A]. As a result, the rated current Ic of the first conversion circuit 40 of the first rechargeable battery module 30 can also be lowered, and the rated capacity Pc of the first conversion circuit 40 of the first rechargeable battery module 30 can be accordingly further reduced.
· As shown in Fig. 1, the ECU 16 of the power supply system 10 may include the resistance adjustment unit 16d. The resistance adjustment unit 16d lowers the internal resistances of the rechargeable batteries 31 and 61 of the rechargeable battery modules 30 and 60 to lower than present internal resistances. Specifically, the resistance adjustment unit 16d changes the temperatures of the rechargeable batteries 31 and 61 from a present temperature thereby to lower the internal resistances of the rechargeable batteries 31 and 61 to lower than present internal resistances. For example, when the internal resistances lower as the temperatures of the rechargeable batteries 31 and 61 rise, the internal resistances of the rechargeable batteries 31 and 61 can be lowered by increasing currents flowing through the rechargeable batteries 31 and 61 or by heating the rechargeable batteries 31 and 61 with a heater.

In Fig. 4, it is assumed that the first output power Po1 = 4000 [W] is the prescribed power value Pr or more while the first output voltage Vo1 = 40 [V] is the prescribed voltage value Vr or more. In this case, the resistance adjustment unit 16d lowers the internal resistance of the first rechargeable battery 31 of the first rechargeable battery module 30 to lower than the present internal resistance. According to such a configuration, a voltage drop caused by the internal resistance of the first rechargeable battery 31 can be decreased, and the first output voltage Vb1 of the first rechargeable battery 31 can be raised. Therefore, when the first output voltage Vm1 is required for the first rechargeable battery module 30, the first output voltage Vo1 required for the first conversion circuit 40 can be lowered. As a result, the rated voltage Vc of the first conversion circuit 40 can be further lowered, and the rated capacity Pc of the first conversion circuit 40 can be accordingly further reduced.

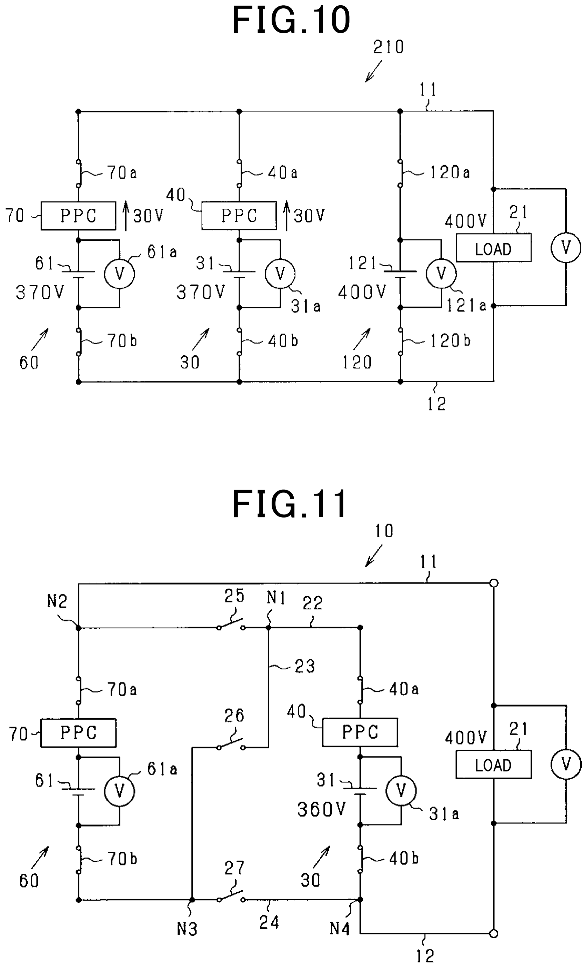

Note that when the internal resistances rise as the temperatures of the rechargeable batteries 31 and 61 rise, the internal resistances of the rechargeable batteries 31 and 61 can be lowered by decreasing currents flowing through the rechargeable batteries 31 and 61 or by cooling the rechargeable batteries 31 and 61 with cooling circuits. Further, when raising the output voltages Vo1 and Vo2 of the conversion circuits 40 and 70 to raise the bus voltage Vbus, the internal resistances of the rechargeable batteries 31 and 61 may be lowered. Further, when lowering the output voltages Vo1 and Vo2 of the conversion circuits 40 and 70 to lower the bus voltage Vbus, the internal resistances of the rechargeable batteries 31 and 61 may be raised.
· Not only when the first output power Po1 is the prescribed power value Pr or more while the first output voltage Vo1 is the prescribed voltage value Vr or more, but also merely when the first output power Po1 is the prescribed power value Pr or more, it is allowed to lower the bus voltage requirement value Vbus* to lower than the present bus voltage requirement value Vbus*, to decrease the first output current Io1 of the first conversion circuit 40 to lower than the present first output current Io1, to charge the first rechargeable battery 31 of the first rechargeable battery module 30 from the second rechargeable battery 61 of the second rechargeable battery module 60, or to lower the internal resistance of the first rechargeable battery 31 to lower than the present internal resistance. Further, merely when the first output voltage Vo1 is the prescribed voltage value Vr or more, it is allowed to lower the bus voltage requirement value Vbus* to lower than the present bus voltage requirement value Vbus*, to decrease the first output current Io1 of the first conversion circuit 40 to lower than the present first output current Io1, to charge the first rechargeable battery 31 of the first rechargeable battery module 30 from the second rechargeable battery 61 of the second rechargeable battery module 60, or to lower the internal resistance of the first rechargeable battery 31 to lower than the present internal resistance. Further, merely when the first output current Io1 is the prescribed current value Ir or more, it is allowed to lower the bus voltage requirement value Vbus* to lower than the present bus voltage requirement value Vbus*, to decrease the first output current Io1 of the first conversion circuit 40 to lower than the present first output current Io1, to charge the first rechargeable battery 31 of the first rechargeable battery module 30 from the second rechargeable battery 61 of the second rechargeable battery module 60, or to lower the internal resistance of the first rechargeable battery 31 to lower than the present internal resistance. Further, in the above-described case, the second output current Io2 of the second conversion circuit 70 may be increased to more than the present second output current Io2, when decreasing the first output current Io1 of the first conversion circuit 40 to lower than the present first output current Io1. Note that the same applies to the second rechargeable battery module 60.
· When lowering the bus voltage requirement value Vbus* to lower than the present bus voltage requirement value Vbus*, the bus voltage setting unit 16a may lower the bus voltage requirement value Vbus* to an extent that the bus voltage Vbus does not fall below a minimum voltage that is minimally required for the load 21.
· When decreasing the output currents Io1 and Io2 of the conversion circuits 40 and 70 to less than present output currents Io1 and Io2, the current adjustment unit 16c may decrease the output current requirement values Io1* and Io2* to an extent that the total of the output currents Io1 and Io2 do not fall below a minimum current that is minimally required for the load 21.
· As shown in Fig. 10, the buses 11 and 12 may be connected with a prescribed rechargeable battery module 120 which includes a rechargeable battery 121 and does not include a conversion circuit. The prescribed rechargeable battery module 120 includes a voltage sensor 121a that detects a voltage of the rechargeable battery 121 and relays 120a and 120b that respectively disconnect and connect the prescribed rechargeable battery module 120 to the buses 11 and 12. According to such a configuration, power can be supplied from the prescribed rechargeable battery module 120 to the buses 11 and 12. Further, the rechargeable battery modules 30 and 60 respectively including the conversion circuits 40 and 70 control the output voltages Vo1 and Vo2 of the conversion circuits 40 and 70 to be added to the output voltages Vb1 and Vb2 of the rechargeable batteries 31 and 61, so that, for example, the output voltages Vm1 and Vm2 of the rechargeable battery modules 30 and 60 can be adjusted to the output voltage Vmb = 400 [V] of the prescribed rechargeable battery module 120. Therefore, a rush current and a circulating current can be inhibited from flowing through the rechargeable battery modules 30 and 60 and the prescribed rechargeable battery module 120 while reducing the number of conversion circuits in the entirety of a power supply system 210. As a result, the power supply system 210 can be further reduced in size.

Then, control similar to in the above-described power supply system 10 and its modification examples can also be executed in the power supply system 210, in a state in which the prescribed rechargeable battery module 120 is disconnected to the buses 11 and 12 by the relays 120a and 120b. In addition, control of decreasing the first output current Io1 of the first conversion circuit 40 to less than the present first output current Io1, charging the first rechargeable battery 31 of the first rechargeable battery module 30 from the rechargeable battery 121 of the prescribed rechargeable battery module 120, or lowering the internal resistance of the first rechargeable battery 31 to lower than the present internal resistance can be executed in a state in which the prescribed rechargeable battery module 120 is connected to the buses 11 and 12 by the relays 120a and 120b.
· As shown in Fig. 11, the power supply system 10 may include a path 22 that connects the positive electrode side (positive side) of the first rechargeable battery module 30 to the bus 11, a path 24 that connects the negative electrode side (negative side) of the second rechargeable battery module 60 to the bus 12, and a path 23 that connects the path 22 to the path 24. The path 22 is provided with a relay 25 (switch) that disconnects and connects the path 22, between a connection point N1 located between the path 22 and the path 23 and a connection point N2 located between the path 22 and the bus 11. The path 23 is provided with a relay 26 (switch) that disconnects and connects the path 23. The path 24 is provided with a relay 27 (switch) that disconnects and connects the path 24, between a connection point N3 located between the path 24 and the path 23 and a connection point N4 located between the path 24 and the bus 12. The relays 25 to 27 are controlled by the ECU 16. Note that the paths 22 to 24 and the relays 25 to 27 constitute a switching circuit.

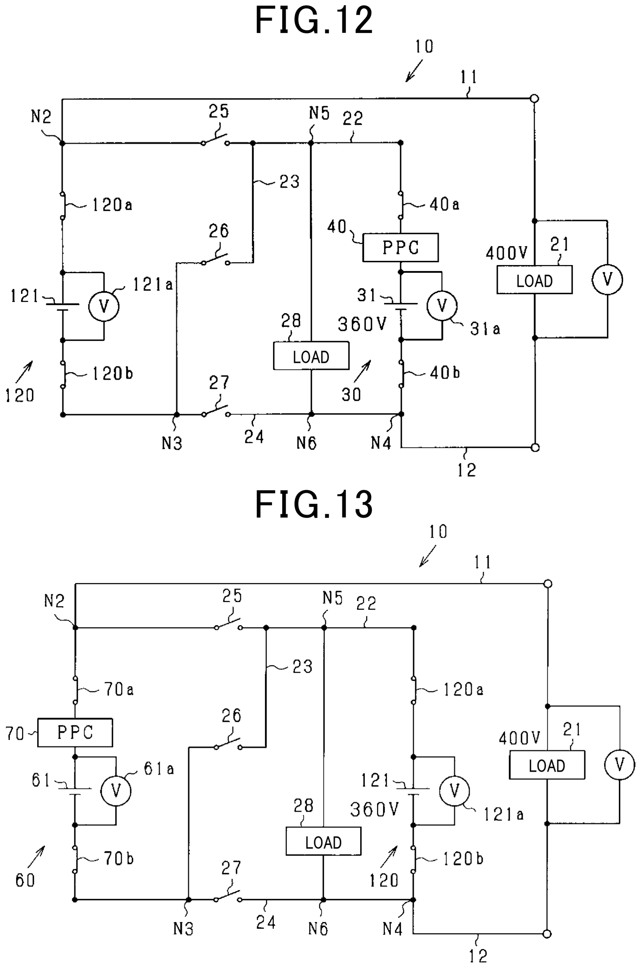

According to the above-described configuration, the ECU 16 can turn on (connect) the relays 25 and 27 and turn off (interrupt) the relay 26 thereby to switch the first rechargeable battery module 30 and the second rechargeable battery module 60 to parallel connection to the buses 11 and 12. Further, the ECU 16 can turn off (interrupt) the relays 25 and 27 and turn on (connect) the relay 26 thereby to switch the first rechargeable battery module 30 and the second rechargeable battery module 60 to serial connection to the buses 11 and 12. In brief, a switching circuit switches the rechargeable battery modules 30 and 60 (a plurality of rechargeable battery modules) between serial connection and parallel connection to the buses 11 and 12. Then, when the rechargeable battery modules 30 and 60 are switched to parallel connection by a switching circuit, power can be supplied from the rechargeable battery modules 30 and 60 to the buses 11 and 12. Thus, the rechargeable battery modules 30 and 60 can be used as a redundant power source. Then, the ECU 16 can execute control similar to the above-described control of the power supply system 10 and its modification examples, in a state in which the rechargeable battery modules 30 and 60 are switched to parallel connection by a switching circuit. Further, when the rechargeable battery modules 30 and 60 are switched to serial connection by a switching circuit, a voltage that is the sum of the output voltages Vm1 and Vm2 of the rechargeable battery modules 30 and 60 can be supplied to the buses 11 and 12. Thus, the rechargeable battery modules 30 and 60 can be used as a higher voltage power source.
· As shown in Fig. 12, the power supply system 10 may include the prescribed rechargeable battery module 120 in place of the second rechargeable battery module 60 of Fig. 11. Further, a load 28 may be parallelly connected to the first rechargeable battery module 30. The load 28 is a load similar to the load 21, and a part of a plurality of loads 21 can be adopted as the load 28. The load 28 is connected to a connection point N5 on the first rechargeable battery module 30 side than the relay 25 in the path 22 and a connection point N6 on the first rechargeable battery module 30 side than the relay 27 in the path 24. Note that the paths 22 and 24 and the relays 25 and 27 constitute an interruption-connection circuit. Further, the paths 22 to 24 and the relays 25 to 27 constitute a switching circuit which switches the first rechargeable battery module 30 (rechargeable battery module) and the prescribed rechargeable battery module 120 between serial connection and parallel connection to the buses 11 and 12.

According to the above-described configuration, the ECU 16 can turn off (interrupt) the relays 25 to 27 thereby to interrupt the first rechargeable battery module 30 and the load 28 to the buses 11 and 12. Then, power can be supplied from the first rechargeable battery module 30 to the load 28 in a state in which the first rechargeable battery module 30 and the load 28 are interrupted to the buses 11 and 12 by an interruption-connection circuit, thereby to decrease the charged amount of the first rechargeable battery 31 of the first rechargeable battery module 30. Then, the first output voltage Vb1 of the first rechargeable battery 31 can be lowered by decreasing the charged amount of the first rechargeable battery 31. Thus, the first output voltage Vb1 of the first rechargeable battery 31 of the first rechargeable battery module 30 is easily lowered to lower than the output voltage Vmb of the rechargeable battery 121 of the prescribed rechargeable battery module 120. Therefore, it is easy to perform control of adding the first output voltage Vo1 of the first conversion circuit 40 to the first output voltage Vb1 of the first rechargeable battery 31 of the first rechargeable battery module 30 and to adjust the first output voltage Vm1 of the first rechargeable battery module 30 to the output voltage Vmb of the prescribed rechargeable battery module 120. Note that the path 23 and the relay 26 can be omitted such that the power supply system 10 includes only an interruption-connection circuit and does not include a switching circuit.
· As shown in Fig. 13, the power supply system 10 may include the prescribed rechargeable battery module 120 in place of the first rechargeable battery module 30 of Fig. 11. Further, the load 28 may be parallelly connected to the prescribed rechargeable battery module 120. The load 28 is connected to the connection point N5 on the prescribed rechargeable battery module 120 side than the relay 25 in the path 22 and the connection point N6 on the prescribed rechargeable battery module 120 side than the relay 27 in the path 24. Note that the relays 120a and 120b constitute an interruption-connection circuit. Further, the paths 22 to 24 and the relays 25 to 27 constitute a switching circuit which switches the second rechargeable battery module 60 (rechargeable battery module) and the prescribed rechargeable battery module 120 between serial connection and parallel connection to the buses 11 and 12.

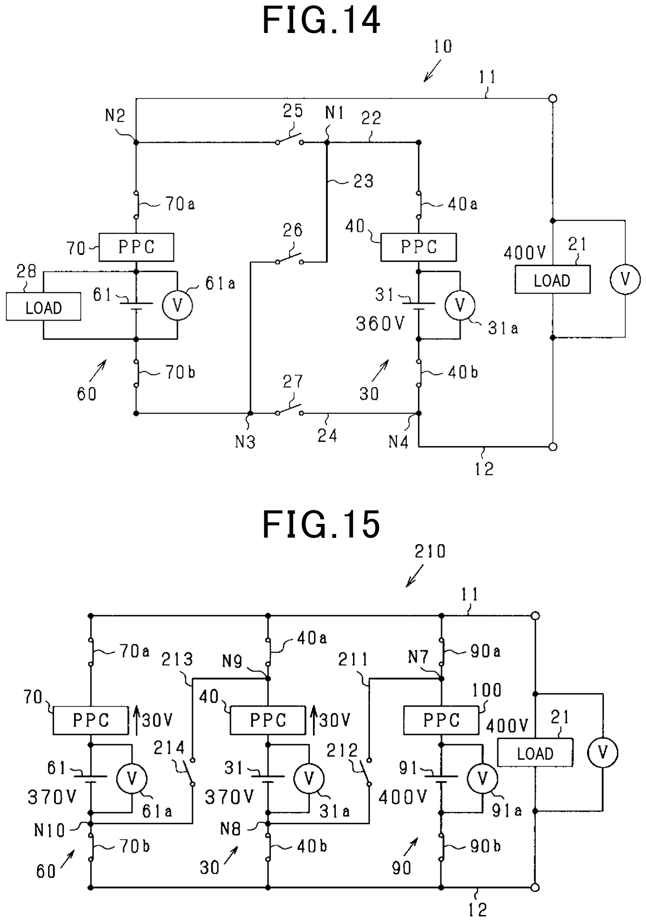

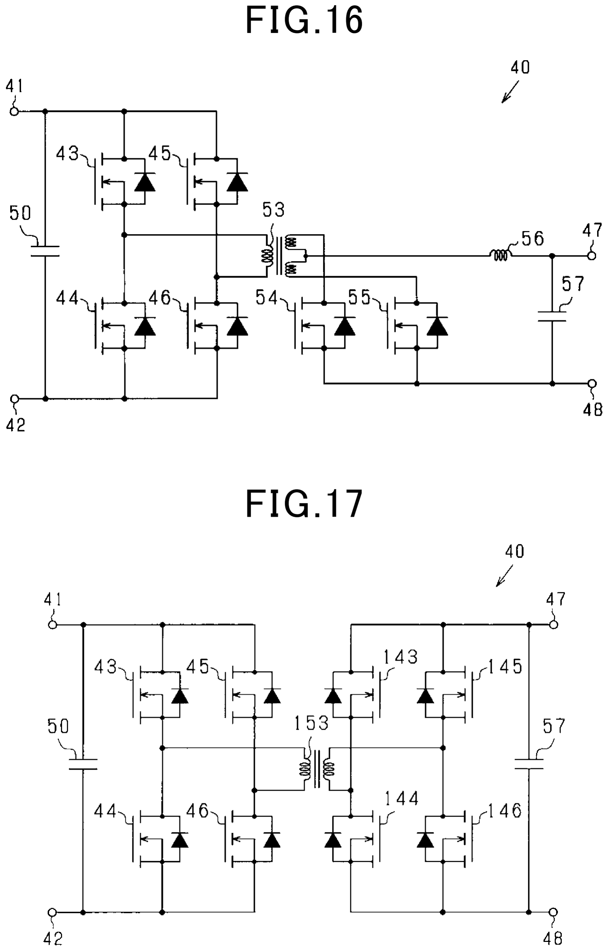

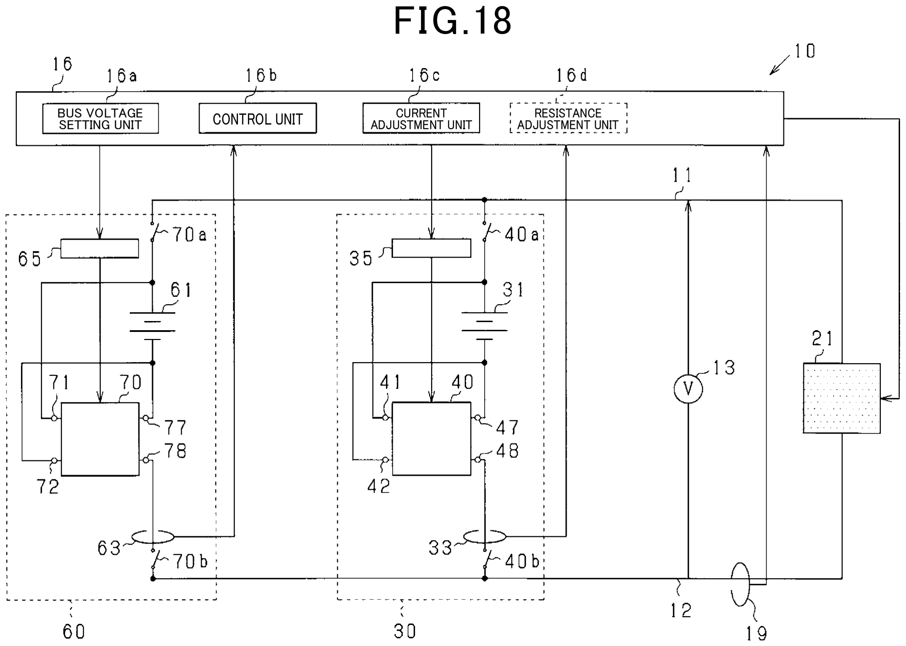

According to the above-described configuration, the ECU 16 can turn on (connect) the relays 120a and 120b thereby to supply power from the prescribed rechargeable battery module 120 to the load 28. Further, when the prescribed rechargeable battery module 120 fails, the ECU 16 can turn off (interrupt) the relays 120a and 120b thereby to interrupt the prescribed rechargeable battery module 120 to the buses 11 and 12 and the load 28. Furthermore, the ECU 16 can turn on the relays 25 and 27 and turn off the relay 26. Therefore, power can be supplied from the second rechargeable battery module 60 to the buses 11 and 12, and power can be supplied from the buses 11 and 12 to the load 28.
· As shown in Fig. 14, the load 28 may be parallelly connected to the second rechargeable battery 61 (rechargeable battery) of the second rechargeable battery module 60 (rechargeable battery module). In this case, power can be supplied from the second rechargeable battery 61 to the load 28 thereby to decrease the charged amount of the second rechargeable battery 61. Thus, it is easy to lower the second output voltage Vb2 of the second rechargeable battery 61 of the second rechargeable battery module 60 to lower than the first output voltage Vb1 of the first rechargeable battery 31 of the first rechargeable battery module 30. Therefore, it is easy to perform control of adding the second output voltage Vo2 of the second conversion circuit 70 to the second output voltage Vb2 of the second rechargeable battery 61 of the second rechargeable battery module 60, and it is easy to adjust the second output voltage Vm2 of the second rechargeable battery module 60 to the bus voltage requirement value Vbus*.
· As shown in Fig. 15, the power supply system 210 may include a third rechargeable battery module 90 in place of the prescribed rechargeable battery module 120 of Fig. 10. Then, the power supply system 210 may include a path 211 that connects a connection point N7 located between a third conversion circuit 100 of the third rechargeable battery module 90 and a relay 90a and a connection point N8 located between the first rechargeable battery 31 of the first rechargeable battery module 30 and a relay 40b. Furthermore, the power supply system 210 may include a path 213 that connects a connection point N9 located between the first conversion circuit 40 of the first rechargeable battery module 30 and a relay 40a and a connection point N10 located between the second rechargeable battery 61 of the second rechargeable battery module 60 and a relay 70b. A relay 212 (switch) that disconnects and connects the path 211 is disposed to the path 211. A relay 214 (switch) that disconnects and connects the path 213 is disposed to the path 213. The relays 212 and 214 are controlled by the ECU 16. Note that the paths 211 and 213 and the relays 212 and 214 constitute a switching circuit. In brief, the power supply system 210 may include three or more rechargeable battery modules (a plurality of rechargeable battery modules), and the switching circuit may switch the three or more rechargeable battery modules between serial connection and parallel connection to the buses 11 and 12. Further, one of the rechargeable battery modules 30, 60, and 90 may be replaced with the prescribed rechargeable battery module 120.
· As the load 21, for example, two or more combinations of an inverter and a motor generator (MG) (a motor unit with an inverter) may be parallelly connected to the buses 11 and 12. In such a case, the number of rechargeable battery modules connected to the buses 11 and 12 may be increased with an increase of the number of motor units each equipped with an inverter.
· The bus voltage setting unit 16a can also adopt the following configuration as a configuration for setting the bus voltage requirement value Vbus* such that the output voltages Vo1, Vo2, and Vo3 of the conversion circuits, 40, 70, and 100 become not more than the rated voltages Vc's of the conversion circuits 40, 70, and 100. Instead of performing the determinations of S10 and S11 in Fig. 3, the bus voltage setting unit 16a may always set the bus voltage requirement value Vbus* to not more than an upper limit voltage value Vu1 obtained by adding the first output voltage Vb1 of the first rechargeable battery 31 to the rated voltage Vc of the first conversion circuit 40, i.e., may guard the upper limit of the bus voltage requirement value Vbus* by the upper limit voltage value Vu1. According to such a configuration, the first output voltage Vo1 of the first conversion circuit 40 can be lowered before the first output voltage Vo1 exceeds the rated voltage Vc. Note that when the second rechargeable battery module 60, the third rechargeable battery module 90, and the like exist, the upper limit of the bus voltage requirement value Vbus* only has to be guarded by a lowest upper limit voltage value Vun among upper limit voltage values Vu2, Vu3, ··· and Vun in the second rechargeable battery module 60, the third rechargeable battery module 90, and the like. Further, the first output voltage Vb1, the second output voltage Vb2, ···, and the nth output voltage Vbn may be voltage values detected by the voltage sensor 51 or may be predicted values based on correlation values correlating with the first output voltage Vb1, the second output voltage Vb2, ···, and the nth output voltage Vbn.
· As shown in Fig. 16, the switching elements 54 and 55 of Fig. 2 may be connected between the transformer 53 and the negative electrode terminal 48 in the first conversion circuit 40 (conversion circuit). Such a configuration also can exert the same working effect as that of the first conversion circuit 40 of Fig. 2. The same applies to the second conversion circuit 70, the third conversion circuit 100, and the like (conversion circuit).
· As shown in Fig. 17, the first conversion circuit 40 (conversion circuit) may be a known insulated DCDC converter including a transformer 153 that is not a center tap type and a secondary-side full bridge circuit constituted by switching elements 143 to 146. The switching elements 143 to 146 are, for example, a FET or an insulated gate bipolar transistor (IGBT). The switching elements 143 to 146 are controlled by the ECU 16. The same applies to the second conversion circuit 70, the third conversion circuit 100, and the like (conversion circuit).
· As the first conversion circuit 40 (conversion circuit), a resonance type DCDC converter also can be adopted. Further, as the first conversion circuit 40 (conversion circuit), a non-insulated DCDC converter such as a buck converter also can be adopted. The same applies to the second conversion circuit 70, the third conversion circuit 100, and the like (conversion circuit).
· The rechargeable battery modules 30 and 60 may be configured as shown in Fig. 18. In brief, the positive electrode of the first rechargeable battery 31 is connected to the bus 11. The primary-side positive electrode terminal 41 of the first conversion circuit 40 is connected to the positive electrode of the first rechargeable battery 31, and the primary-side negative electrode terminal 42 of the first conversion circuit 40 is connected to the negative electrode of the first rechargeable battery 31. Further, the secondary-side positive electrode terminal 47 of the first conversion circuit 40 is connected to the negative electrode of the first rechargeable battery 31. The secondary-side negative electrode terminal 48 of the first conversion circuit 40 is connected to the bus 12. In this case, the positive electrode and the negative electrode of the first rechargeable battery 31 are also connected to the primary-side terminal pair 41 and 42 of the first conversion circuit 40, respectively, and the first rechargeable battery 31 is serially connected to the secondary-side terminal pair 47 and 48 of the first conversion circuit 40. Such a configuration also can exert the same working effect as that of the above-described embodiment. Note that the same applies to the second rechargeable battery module 60, the third rechargeable battery module 90, and the like (rechargeable battery module).
· At least one function of the bus voltage setting unit 16a, the control unit 16b, the current adjustment unit 16c, and the resistance adjustment unit 16d of the ECU 16 can also be achieved by, for example, a power control electronic control unit (ECU) that controls motive power of an electric vehicle or a vehicle control ECU (central ECU) that controls an electric vehicle in an integrated manner. Further, when the power supply systems 10 and 210 are used as, for example, a stationary power source, the functions of the bus voltage setting unit 16a, the control unit 16b, the current adjustment unit 16c, and the resistance adjustment unit 16d of the ECU 16 can also be achieved by a stationary power source control ECU (control device) that controls a stationary power source.
· The ECU 16 and the method therefor according to the present disclosure may be achieved by a dedicated computer provided by constituting a processor and a memory programmed to execute one or more functions (instructions) embodied by a computer program. Alternatively, the ECU 16 and the method therefor according to the present disclosure may be achieved by a dedicated computer provided by constituting a processor with one or more dedicated hardware logic circuits. Alternatively, the ECU 16 and the method therefor according to the present disclosure may be achieved by one or more dedicated computers constituted by a combination of a processor and a memory programmed to execute one or more functions and a processer constituted by one or more hardware logic circuits. The computer program may be stored as instructions to be executed by a computer, in a computer-readable non-transitory tangible memory medium.

Note that the above-described embodiment and modification examples can be executed in combination to an extent that the combination is possible.

Hereinafter, characteristic configurations extracted from the above-described embodiment and modification examples will be described.

### [Configuration 1]

A power supply system (10, 210) in which a rechargeable battery module (30, 60, 90) including a rechargeable battery (31, 61, 91) and a conversion circuit (40, 70, 100) that converts power input from the rechargeable battery to a primary-side terminal pair (41, 42, 71, 72) and outputs the converted power from a secondary-side terminal pair (47, 48, 77, 78) is connectable to a power supply bus (11, 12), in which
a positive electrode and a negative electrode of the rechargeable battery are individually connected to the primary-side terminal pair of the conversion circuit, and the rechargeable battery is serially connected to the secondary-side terminal pair of the conversion circuit,
the power supply system includes
a bus voltage setting unit (16a) that sets a bus voltage requirement value which is a voltage required for the power supply bus, and
a control unit (16b) that controls an output voltage of the conversion circuit such that an output voltage of the rechargeable battery module approaches the bus voltage requirement value, and
the bus voltage setting unit sets the bus voltage requirement value such that an output power of the conversion circuit becomes not more than a rated power of the conversion circuit or such that an output voltage of the conversion circuit becomes not more than a rated voltage of the conversion circuit.

### [Configuration 2]

The power supply system according to configuration 1 in which the bus voltage setting unit lowers the bus voltage requirement value to lower than the present bus voltage requirement value, in response to an output power of the conversion circuit becoming not less than a prescribed power value which is smaller than the rated power, in response to an output voltage of the conversion circuit becoming not less than the rated voltage, or in response to an output current of the conversion circuit becoming not less than a prescribed current value which is smaller than a rated current of the conversion circuit.

### [Configuration 3]

The power supply system according to configuration 1 or 2, including a current adjustment unit (16c) that decreases an output current of the conversion circuit to less than a present output current, in response to an output power of the conversion circuit becoming not less than a prescribed power value which is smaller than the rated power, in response to an output voltage of the conversion circuit becoming not less than the rated voltage, or in response to an output current of the conversion circuit becoming not less than a prescribed current value which is smaller than a rated current of the conversion circuit.

### [Configuration 4]

The power supply system according to configuration 3, in which
the rechargeable battery module is a first rechargeable battery module (30),
the power supply system further includes a second rechargeable battery module (60) equivalent to the rechargeable battery module, and
the current adjustment unit decreases an output current of the conversion circuit of the first rechargeable battery module to less than a present output current and increases an output current of the conversion circuit of the second rechargeable battery module to more than a present output current, in response to an output power of the conversion circuit of the first rechargeable battery module becoming not less than the prescribed power value, in response to an output voltage of the conversion circuit of the first rechargeable battery module becoming not less than the rated voltage, or in response to an output current of the conversion circuit of the first rechargeable battery module becoming not less than the prescribed current value.

### [Configuration 5]

The power supply system according to any one of configurations 1 to 4, in which
the rechargeable battery module is a first rechargeable battery module (30),
the power supply system further includes a second rechargeable battery module (60) equivalent to the rechargeable battery module, and
the control unit charges the rechargeable battery of the first rechargeable battery module from the rechargeable battery of the second rechargeable battery module, in response to an output power of the conversion circuit of the first rechargeable battery module becoming not less than a prescribed power value which is smaller than the rated power, in response to an output voltage of the conversion circuit of the first rechargeable battery module becoming not less than the rated voltage, or in response to an output current of the conversion circuit of the first rechargeable battery module becoming not less than a prescribed current value which is smaller than a rated current of the conversion circuit.

### [Configuration 6]

The power supply system according to any one of configurations 1 to 5, including a resistance adjustment unit (16d) that lowers an internal resistance of the rechargeable battery of the rechargeable battery module including the conversion circuit to lower than a present internal resistance, in response to an output power of the conversion circuit becoming not less than a prescribed power value which is smaller than the rated power, in response to an output voltage of the conversion circuit becoming not less than the rated voltage, or in response to an output current of the conversion circuit becoming not less than a prescribed current value which is smaller than a rated current of the conversion circuit.

### [Configuration 7]

The power supply system according to configuration 6, in which the resistance adjustment unit lowers an internal resistance of the rechargeable battery to lower than a present internal resistance by changing a temperature of the rechargeable battery from a present temperature.

### [Configuration 8]

The power supply system according to any one of configurations 1 to 3, in which a prescribed rechargeable battery module (120) that includes a rechargeable battery (121) and does not include the conversion circuit is connected to the power supply bus.

### [Configuration 9]

The power supply system according to configuration 8, in which
a load (28) is connected to the rechargeable battery module, and
the power supply system further comprises an interruption-connection circuit (22, 24, 25, 27) that interrupts and connects the rechargeable battery module and the load to the power supply bus.

### [Configuration 10]

The power supply system according to configuration 8, in which
a load (28) is connected to the power supply bus and the prescribed rechargeable battery module, and
the power supply system further includes an interruption-connection circuit (120a, 120b) that interrupts and connects the prescribed rechargeable battery module to the power supply bus and the load.

### [Configuration 11]

The power supply system according to any one of configurations 8 to 10, including a switching circuit (22 to 27, 211 to 214) that switches the rechargeable battery module and the prescribed rechargeable battery module between parallel connection and serial connection.

### [Configuration 12]

The power supply system according to any one of configurations 1 to 7, including
a plurality of the rechargeable battery modules (30, 60, and 90), and
a switching circuit (22 to 27, 211 to 214) that switches the plurality of the rechargeable battery modules between parallel connection and serial connection.

The present disclosure has been described in accordance with examples, but it is understood that the present disclosure should not be limited to the examples and configurations. The present disclosure encompasses various modified examples and modifications within equivalent ranges. In addition, various combinations and forms as well as other combinations and forms including one or more/less constituents thereto are also within the scope and spirit of the present disclosure.

## Claims

1. A power supply system (10, 210) in which a rechargeable battery module (30, 60, 90) including a rechargeable battery (31, 61, 91) and a conversion circuit (40, 70, 100) that converts power input from the rechargeable battery to a primary-side terminal pair (41, 42, 71, 72) and outputs the converted power from a secondary-side terminal pair (47, 48, 77, 78) is connectable to a power supply bus (11, 12), wherein
a positive electrode and a negative electrode of the rechargeable battery are individually connected to the primary-side terminal pair of the conversion circuit, and the rechargeable battery is serially connected to the secondary-side terminal pair of the conversion circuit,
the power supply system includes
a bus voltage setting unit (16a) that sets a bus voltage requirement value which is a voltage required for the power supply bus, and
a control unit (16b) that controls an output voltage of the conversion circuit such that an output voltage of the rechargeable battery module approaches the bus voltage requirement value, and
the bus voltage setting unit sets the bus voltage requirement value such that an output power of the conversion circuit becomes not more than a rated power of the conversion circuit or such that an output voltage of the conversion circuit becomes not more than a rated voltage of the conversion circuit.

2. The power supply system according to claim 1, wherein the bus voltage setting unit lowers the bus voltage requirement value to lower than the present bus voltage requirement value, in response to an output power of the conversion circuit becoming not less than a prescribed power value which is smaller than the rated power, in response to an output voltage of the conversion circuit becoming not less than the rated voltage, or in response to an output current of the conversion circuit becoming not less than a prescribed current value which is smaller than a rated current of the conversion circuit.

3. The power supply system according to claim 1 or 2, further comprising a current adjustment unit (16c) that decreases an output current of the conversion circuit to less than a present output current, in response to an output power of the conversion circuit becoming not less than a prescribed power value which is smaller than the rated power, in response to an output voltage of the conversion circuit becoming not less than the rated voltage, or in response to an output current of the conversion circuit becoming not less than a prescribed current value which is smaller than a rated current of the conversion circuit.

4. The power supply system according to claim 3, wherein
the rechargeable battery module is a first rechargeable battery module (30),
the power supply system further comprises a second rechargeable battery module (60) equivalent to the rechargeable battery module, and
the current adjustment unit decreases an output current of the conversion circuit of the first rechargeable battery module to less than a present output current and increases an output current of the conversion circuit of the second rechargeable battery module to more than a present output current, in response to an output power of the conversion circuit of the first rechargeable battery module becoming not less than the prescribed power value, in response to an output voltage of the conversion circuit of the first rechargeable battery module becoming not less than the rated voltage, or in response to an output current of the conversion circuit of the first rechargeable battery module becoming not less than the prescribed current value.

5. The power supply system according to claim 1 or 2, wherein
the rechargeable battery module is a first rechargeable battery module (30),
the power supply system further comprises a second rechargeable battery module (60) equivalent to the rechargeable battery module, and
the control unit charges the rechargeable battery of the first rechargeable battery module from the rechargeable battery of the second rechargeable battery module, in response to an output power of the conversion circuit of the first rechargeable battery module becoming not less than a prescribed power value which is smaller than the rated power, in response to an output voltage of the conversion circuit of the first rechargeable battery module becoming not less than the rated voltage, or in response to an output current of the conversion circuit of the first rechargeable battery module becoming not less than a prescribed current value which is smaller than a rated current of the conversion circuit.

6. The power supply system according to claim 1 or 2, further comprising a resistance adjustment unit (16d) that lowers an internal resistance of the rechargeable battery of the rechargeable battery module including the conversion circuit to lower than a present internal resistance, in response to an output power of the conversion circuit becoming not less than a prescribed power value which is smaller than the rated power, in response to an output voltage of the conversion circuit becoming not less than the rated voltage, or in response to an output current of the conversion circuit becoming not less than a prescribed current value which is smaller than a rated current of the conversion circuit.

7. The power supply system according to claim 6, wherein the resistance adjustment unit lowers an internal resistance of the rechargeable battery to lower than a present internal resistance by changing a temperature of the rechargeable battery from a present temperature.

8. The power supply system according to claim 1 or 2, wherein a prescribed rechargeable battery module (120) that includes a rechargeable battery (121) and does not include the conversion circuit is connected to the power supply bus.

9. The power supply system according to claim 8, wherein
a load (28) is connected to the rechargeable battery module, and
the power supply system further comprises an interruption-connection circuit (22, 24, 25, 27) that interrupts and connects the rechargeable battery module and the load to the power supply bus.

10. The power supply system according to claim 8, wherein
a load (28) is connected to the power supply bus and the prescribed rechargeable battery module, and
the power supply system further comprises an interruption-connection circuit (120a, 120b) that interrupts and connects the prescribed rechargeable battery module to the power supply bus and the load.

11. The power supply system according to claim 8, further comprising a switching circuit (22 to 27, 211 to 214) that switches the rechargeable battery module and the prescribed rechargeable battery module between parallel connection and serial connection.

12. The power supply system according to claim 1 or 2, further comprising
a plurality of the rechargeable battery modules (30, 60, and 90), and
a switching circuit (22 to 27, 211 to 214) that switches the plurality of the rechargeable battery modules between parallel connection and serial connection.

13. A control program applied to a power supply system (10, 210) in which a rechargeable battery module (30, 60, 90) including a rechargeable battery (31, 61, 91) and a conversion circuit (40, 70, 100) that converts power input from the rechargeable battery to a primary-side terminal pair (41, 42, 71, 72) and outputs the converted power from a secondary-side terminal pair (47, 48, 77, 78) is connectable to a power supply bus (11, 12), a positive electrode and a negative electrode of the rechargeable battery are individually connected to the primary-side terminal pair of the conversion circuit, and the rechargeable battery is serially connected to the secondary-side terminal pair of the conversion circuit,
the control program causing a computer (16) to execute
processing of setting a bus voltage requirement value which is a voltage required for the power supply bus,
processing of controlling an output voltage of the conversion circuit such that an output voltage of the rechargeable battery module approaches the bus voltage requirement value, and
processing of setting the bus voltage requirement value such that an output power of the conversion circuit becomes not more than a rated power of the conversion circuit or such that an output voltage of the conversion circuit becomes not more than a rated voltage of the conversion circuit.
